# EUROPÄISCHE PATENTSCHRIFT

(11) **EP 2 396 634 B1**
(45) Veröffentlichungstag und Bekanntmachung des Hinweises auf die Patenterteilung: **07.11.2018**
(21) Anmeldenummer: 10703628.7
(22) Anmeldetag: 10.02.2010
(51) Int. Cl.: G01G 19/00, G01G 23/18, G07B 17/00

(54) **WAAGE MIT SPERRGUTWIEGEFUNKTION**
BALANCE HAVING BULKY GOODS WEIGHING FUNCTION
BALANCE AVEC FONCTION DE PESAGE D'OBJETS ENCOMBRANTS

(30) Priorität: 12.02.2009 DE 102009008565
(43) Veröffentlichungstag der Anmeldung: 21.12.2011
(73) Patentinhaber: Leifheit AG, 56377 Nassau (DE)
(72) Erfinder: DENK, Andre, 45131 Essen (DE); MODDICK, Christian, 48317 Drensteinfurt (DE); ÖSTERLE, Christian, 56379 Singhofen (DE)
(74) Vertreter: Bungartz Christophersen Partnerschaft mbB Patentanwälte
(86) Internationale Anmeldenummer: PCT/EP2010/000813
(87) Internationale Veröffentlichungsnummer: WO 2010/091844

(56) Entgegenhaltungen:
- EP-A2- 0 840 100
- GB-A- 2 183 052
- JP-A- 59 193 321
- US-A- 4 207 955
- US-A- 4 800 973
- US-A- 5 535 127
- US-A1- 2004 168 835

## Beschreibung

Die Erfindung betrifft eine Waage nach dem Oberbegriff des Anspruch 1.

Waagen mit einer so genannten Sperrgutwiegefunktion sind aus der US 4800 973 A, der JP59 193321 A oder der US 4 207 955 A bekannt. Hier wird der gemessene Geschichtswert nach der Abnahme des Wiegegutes von der Wiegefläche über eine vorgegebene Zeitspanne angezeigt, so dass das zuvor abgedeckte Display ablesbar ist. Auch die US2004/168835 A1 und die GB 2 183 052 A weisen eine solche Funktion auf.

Der Nachteil dieser Waagen besteht jedoch darin, dass die Funktion zuvor aktiviert werden muss, was nicht immer einfach ist und häufig vom Benutzer auch vergessen wird.

Aus DE 198 45 966 A1 ist ferner eine Haushaltswaage mit einem feststehenden Grundkörper bekannt, an dem eine ausfahrbare Messwertanzeigeeinheit angeordnet ist, so dass auch das Abbiegen von sperrigen Dingen insoweit ermöglicht ist, als die ausschwenkbare Anzeige gut lesbar bleibt.

Aus US 5,203,419 ist eine Postwaage mit einem ausziehbaren Gewichtsanzeigedisplay zum Wiegen von übergroßen Paketen bekannt.

Die aus dem Stand der Technik bekannten Waagen, die ein Wiegen von großem Wiegegut ermöglichen, haben den Nachteil, dass sie mechanisch äußerst aufwendig sind und dass zwar größeres Wiegegut verwiegbar ist, als bei Waagen ohne ausschwenkbare oder ausziehbare Anzeigevorrichtung, dass jedoch trotzdem die Größe der abwiegbaren Güter auf das Maß beschränkt ist, das die ausschwenkbaren bzw. ausziehbaren Anzeigeeinheiten zulassen.

Es ist die Aufgabe der vorliegenden Erfindung, eine Waage anzugeben, die bei Vermeidung mechanisch aufwändiger Konstruktionen auch für sperriges Wiegegut zuverlässig verwendbar ist.

Die Aufgabe wird durch eine Waage nach Anspruch 1 gelöst.

Die Erfindung hat den besonderen Vorteil, dass die Sperrgutwiegefunktion automatisch aktiviert ist. Darüber hinaus hat eine bevorzugte Ausgestaltung der Erfindung den Vorteil, dass durch die Deaktivierung der Funktionstasten eine unbeabsichtigte Fehlbedienung beim Verwiegen von sperrigem Wiegegut wirkungsvoll vermieden ist. Insbesondere bei Ausführungsformen bei denen die Funktionstasten flächenbündig neben oder in der Wiegefläche angeordnet sind, kommt es in erfindungsgemäßer Weise dank der automatischen Deaktivierung der Funktionstasten im Sperrgutwiegemodus nicht zu ungewollten Fehlbedienungen, etwa weil versehentlich mit dem zu wiegenden Gut eine Taste gedrückt wird.

In erfindungsgemäßer Weise wurde das räumliche Problem des durch das Wiegegut verdeckten Displays dadurch gelöst, dass der Gewichtswert nach Beendigung des Wiegevorganges - zeitlich also später - für den Benutzer noch ablesbar ist. Bei einer vorteilhaften Ausgestaltung der erfindungsgemäßen Waage ist hierbei vorgesehen, dass die Waage den Messwert als Gewichtswert ausgibt (und auch nach Entfernen des Wiegegutes für eine - vorzugsweise einstellbare - Zeitspanne weiter anzeigt), der nachdem das Wiegegut auf der Wiegefläche zur Ruhe gekommen ist, während eines vorgegebenen Messzeitraumes als zeitlich konstanter Messwert ermittelt wurde.

Die Sperrgutwiegefunktion wird nach dem Wiegevorgang automatisch abgeschaltet, um beispielsweise zu gewährleisten, dass beim anschließenden Verwiegen von Schüttgut - bei sichtbarem Display - eine kontinuierlich aktuelle, dem jeweilig tatsächlich entsprechenden Gewichtswert folgende Anzeige ermöglicht ist. Andererseits wird die Sperrgutwiegefunktion automatisch aktiviert, sobald ein Gegenstand auf die Wiegefläche aufgelegt wird oder der Wiegefläche angenähert wird, der so groß ist, dass er das Display verdeckt bzw. verdecken wird. Es ist vorgesehen, dass mit dem zumindest einem Sensor und/oder mit zumindest einem weiteren Sensor ein Verdecken des Displays detektiert wird. Ebenso ist es möglich einen Sensor vorzusehen, der ein Betätigen einer Funktionstaste durch das Wiegegut selbst feststellt.

Zumindest ein Sensor kann als optischer Sensor ausgebildet sein. Bei einer Ausführungsform ist vorgesehen, dass der Sensor zumindest einen Fotodetektor beinhaltet. Bei einer anderen Ausführungsform ist der Sensor als Lichtschranke ausgebildet. Bei einer ganz besonders zuverlässig arbeitenden Ausführungsform sind mehrere Sensoren, die als Fotodetektoren ausgebildet sind, um das Display herum angeordnet.

Bei einer anderen Ausführungsform ist ein Sensor als Berührungssensor, beispielsweise als Taster, ausgebildet. Auch bei dieser Ausführungsform kann in vorteilhafter Weise vorgesehen sein, dass mehrere Sensoren in günstiger Weise derart, insbesondere im Bereich des Displays angeordnet sind, dass ein zuverlässiges Aktivieren der Sperrgutwiegefunktion gewährleistet ist. Bei einer weiteren erfindungsgemäßen Ausführungsfunktion ist ein Sensor als Nährungssensor, insbesondere als kapazitiver Näherungssensor, ausgebildet. Diese Ausführungsform hat den besonderen Vorteil, dass der Sensor vollkommen verdeckt eingebaut werden kann und somit gut geschützt ist.

Bei einer weiteren Ausführungsform ist der Sensor als Ultraschallsensor ausgebildet. Besonders vorteilhaft ist bei dieser Ausführungsform eine Variante, bei der mehrere Ultraschallsensoren derart angeordnet sind, dass die Größe des aufzulegenden Wiegegutes bereits unmittelbar vor dem Auflegen ermittelt werden kann.

Vorteilhafter Weise ist der zumindest eine Sensor bzw. sind die mehreren Sensoren im Display und/oder am Rande des Displays angeordnet. Es kann alternativ oder zusätzlich auch vorgesehen sein, dass der zumindest eine Sensor bzw. die mehreren Sensoren im Bereich von Funktionstasten angeordnet sind.

Bei einer ganz besonders kompakten und zuverlässig arbeitenden Ausführungsform ist vorgesehen, dass zumindest eine Funktionstaste gleichzeitig als Sensor ausgebildet ist. Beispielsweise kann vorgesehen sein, dass rechts und links neben einem Display Funktionstasten, die beispielsweise als kapazitive Nährungsschalter ausgebildet sein können, gleichzeitig als Sensoren fungieren, die ein Abdecken des Displays ermitteln, damit die Sperrgutwiegefunktion automatisch aktiviert werden kann.

Ein automatisches Ermitteln der Größe des Wiegeguts bereits bei Annäherung an die Wiegefläche - vorzugsweise vor dem Auflegen auf die Wiegefläche - ist prinzipiell in erfindungsgemäßer Weise unabhängig von der Art des verwendeten Sensors bzw. von der Art der verwendeten Sensoren möglich.

Um dem Benutzer zu signalisieren, dass die Waage einen Gewichtswert ermittelt hat, ist bei einer besonderen Ausführungsform vorgesehen, dass die Waage dem Benutzer ein Signal ausgibt, das ihm anzeigt, das Wiegegut wieder entfernen zu können. Bei dem Signal kann es sich beispielsweise um ein akustisches Signal handeln.

Die erfindungsgemäße Waage hat den ganz besonderen Vorteil, dass sie ein Integrieren des Displays in die Wiegefläche - insbesondere ein flächenbündiges Integrieren des Displays in die Wiegefläche - genauso - ohne Einschränkung der Sperrgutwiegefunktion - erlaubt, wie eine Ausführungsform bei der das Display selbst, zumindest teilweise, als Wiegefläche fungiert. Gleiches gilt in analoger Weise für das Integrieren von Funktionstasten in die Wiegefläche. Insgesamt wird hierdurch eine kompakte und unempfindliche Bauform ermöglicht, die dennoch das Verwiegen von Gegenständen ermöglicht, die um ein Vielfaches größer sein können, als die Waage selbst.

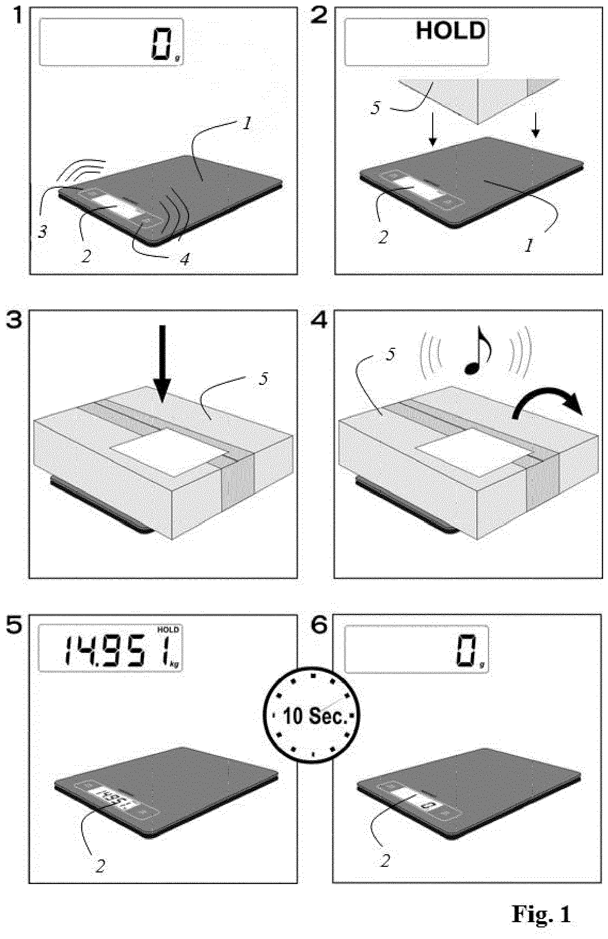

In der Zeichnung ist der Erfindungsgegenstand schematisch dargestellt und wird anhand der Figur nachfolgend beschrieben, wobei gleich wirkende Elemente mit denselben Bezugszeichen versehen sind. Dabei zeigt Fig. 1 die Bedienung einer erfindungsgemäßen Waage.

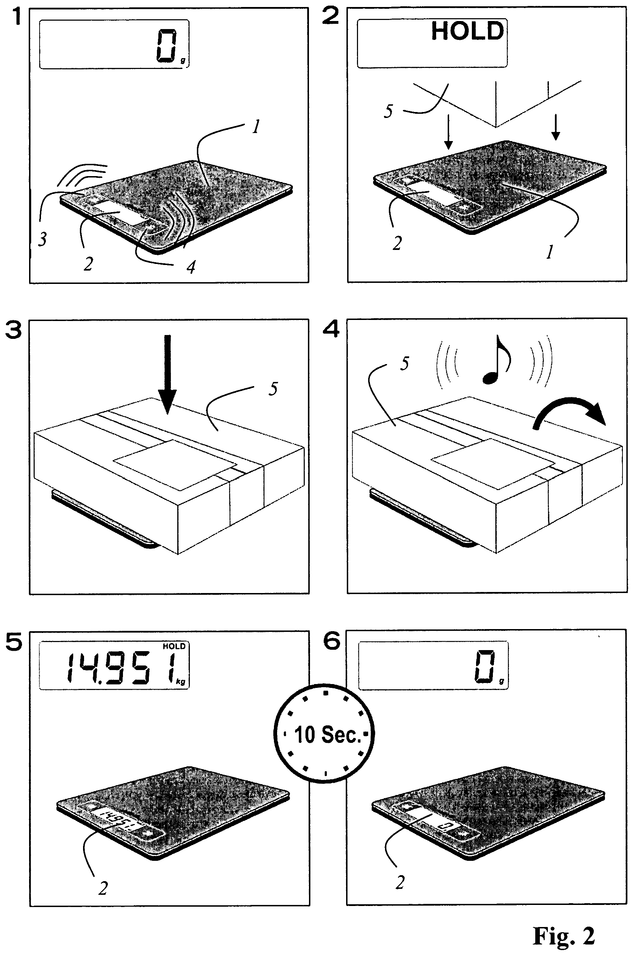

Figur 1 zeigt eine erfindungsgemäße Waage bei der die Sperrgutwiegefunktion bei Annäherung des Wiegegutes automatisch aktiviert wird, wenn das Wiegegut so groß ist, dass es das Display verdecken wird. Die Waage weist eine Wiegefläche 1 auf, in die flächenbündig ein Display 2 sowie eine erste Funktionstaste 3 und eine weitere Funktionstaste 4 integriert sind. Die erste Funktionstaste 3 und die weitere Funktionstaste 4 sind als Näherungssensoren ausgerüstet und fungieren gleichzeitig - neben ihrer Funktion als Funktionstasten - als Sensoren zur Ermittlung der Größe eines sich annähernden Wiegegutes. Bei Annäherung eines Wiegegutes 5, das so groß ist, dass es das Display 2 verdecken wird, schaltet die Waage automatisch in den Sperrgutwiegemodus. Dies ist in Darstellung 2 der Figur 2 näher gezeigt.

Zur Anzeige, dass die Sperrgutwiegefunktion aktiviert ist, erscheint im Display "hold", was in Darstellung 2 gezeigt ist. Anschließend kann der Benutzer das Wiegegut 5 auflegen. Die Waage ermittelt nun das Gewicht des Wiegegutes 5 und signalisiert dem Benutzer das Ende des Messvorganges durch ein akustisches Signal, das dem Benutzer mitteilt, das Wiegegut 5 wieder von der Wiegefläche nehmen zu können. Dies ist in den Darstellungen 3 und 4 gezeigt. Nach Entfernen des Wiegegutes 5 kann der Benutzer auf dem Display 2 das Gewicht des Wiegegutes 5 für 10 Sekunden ablesen. Dies ist in Darstellung 5 näher gezeigt. Nach 10 Sekunden schaltet die Waage automatisch die Sperrgutwiegefunktion wieder ab (Darstellung 6).

Die Erfindung wurde in Bezug auf eine besondere Ausführungsform beschrieben.

### Bezugszeichenliste

- 1: Wiegefläche
- 2: Display
- 3: Erste Funktionstaste
- 4: Zweite Funktionstaste
- 5: Wiegegut

## Patentansprüche

1. Waage mit einer Wiegefläche (1) zur Aufnahme eines Wiegegutes (5), einem Display (2) zur Anzeige eines Gewichtswertes und einer Sperrgutwiegefunktion, die das Gewicht des Wiegegutes (5) zu ermitteln und für eine Zeitspanne nach Entfernen des Wiegegutes (5)von der Wiegefläche (1) auf dem Display (2) anzuzeigen vermag,
**dadurch gekennzeichnet, dass**
zumindest ein, am Rand des Displays (2) oder im Display (2) angeordneter Sensor vorgesehen ist, der ein Verdecken des Displays (2) durch das Wiegegut (5) zu ermitteln vermag, wobei die Sperrgutwiegefunktion bei Feststellung eines abgedeckten Displays (2) automatisch aktiviert ist.

2. Waage nach Anspruch 1, **dadurch gekennzeichnet, dass** die Sperrgutwiegefunktion zumindest eine Funktionstaste (3 oder 4) der Waage vorübergehend deaktiviert.

3. Waage nach Anspruch 2, **dadurch gekennzeichnet, dass** zumindest eine Funktionstaste (3 oder 4) in die Wiegefläche (1) integriert ist und ein optischer Sensor oder ein kapazitiver Sensor vorgesehen ist, der eine drohende Betätigen einer Funktionstaste durch Annäherung des Wiegegutes (5) zu ermitteln vermag, wobei die Sperrgutwiegefunktion bei Feststellung der drohenden Betätigen der Funktionstaste automatisch aktiviert ist.

4. Waage mit Sperrgutwiegefunktion nach einem der Ansprüche 1 bis 3, **dadurch gekennzeichnet, dass** zumindest ein Sensor als optischer Sensor ausgebildet ist.

5. Waage mit Sperrgutwiegefunktion nach einem der Ansprüche 1 bis 3, **dadurch gekennzeichnet, dass** zumindest Sensor als Berührungssensor, insbesondere als kapazitiver Näherungssensor ausgebildet ist.

6. Waage mit Sperrgutwiegefunktion nach einem der Ansprüche 1 bis 3, **dadurch gekennzeichnet, dass** zumindest ein Sensor als Ultraschallsensor ausgebildet ist.

7. Waage mit Sperrgutwiegefunktion nach einem der Ansprüche 1 bis 6, **dadurch gekennzeichnet, dass** zumindest eine Funktionstaste (3 oder 4) gleichzeitig als Sensor ausgebildet ist.

8. Waage mit Sperrgutwiegefunktion nach einem der Ansprüche 1 bis 7, **dadurch gekennzeichnet, dass** die Waage ein akustisches Signal ausgibt, sobald der Gewichtswert ermittelt ist.

9. Waage mit Sperrgutwiegefunktion nach einem der Ansprüche 1 bis 8, **dadurch gekennzeichnet, dass** das Display (2) in die Wiegefläche (1) integriert ist.

10. Waage mit Sperrgutwiegefunktion nach einem der Ansprüche 1 bis 8, **dadurch gekennzeichnet, dass** das Display (2) zumindest teilweise als Wiegefläche (1) fungiert.

## Claims

1. Scales with a weighing surface (1) to accommodate a product for weighing (5), a display (2) to display a weight value and a bulky goods weighing function which is able to determine the weight of the product for weighing (5) and can display the said weight on the display (2) for a time after removal of the product for weighing (5) from the weighing surface (1),
**characterised in that**
at least one sensor is provided arranged on the edge of the display (2) or in the display (2) wherein said sensor is able to determine the concealing of the display (2) by the product for weighing (5), wherein the bulky goods weighing function is activated automatically when it is determined that the display (2) is covered.

2. Scales according to claim 1, **characterised in that** the bulky goods weighing function temporarily deactivates at least one function key (3 or 4) of the scales.

3. Scales according to claim 2, **characterised in that** at least one function key (3 or 4) is incorporated in the weighing surface (1) and an optical sensor or a capacitative sensor is provided which is able to determine a threatened activation of a function key from an approach of the product for weighing (5), wherein the bulky goods weighing function is activated automatically when the threatened activation of the function key is established.

4. Scales with a bulky goods weighing function according to any one of claims 1 to 3, **characterised in that** at least one sensor is designed as an optical sensor.

5. Scales with a bulky goods weighing function according to any one of claims 1 to 3, **characterised in that** at least one sensor is designed as a contact sensor, in particular as a capacitative contact sensor.

6. Scales with a bulky goods weighing function according to any one of claims 1 to 3, **characterised in that** at least one sensor is designed as an ultrasonic sensor.

7. Scales with a bulky goods weighing function according to any one of claims 1 to 6, **characterised in that** at least one function key (3 or 4) is simultaneously designed as a sensor.

8. Scales with a bulky goods weighing function according to any one of claims 1 to 7, **characterised in that** the scales emit an acoustic signal as soon as the weight value is determined.

9. Scales with a bulky goods weighing function according to any one of claims 1 to 8, **characterised in that** the display (2) is incorporated in the weighing surface (1).

10. Scales with a bulky goods weighing function according to any one of claims 1 to 8, **characterised in that** the display (2) functions at least partly as a weighing surface (1).

## Revendications

1. Balance avec une surface de pesage (1) pour la réception d'un produit à peser (5), un écran (2) pour l'affichage d'une valeur pondérale et une fonction de pesage d'objets encombrants, qui permet d'évaluer le poids du produit à peser (5) et de l'afficher à l'écran (2) pendant un laps de temps après avoir enlevé le produit à peser (5) de la surface de pesage (1),
**caractérisée en ce qu'**
au moins un capteur disposé au bord de l'écran (2) ou dans l'écran (2) est prévu, ledit capteur permettant d'identifier un masquage de l'écran (2) par le produit à peser (5), la fonction de pesage d'objets encombrants étant activée automatiquement lors de l'identification d'un écran (2) recouvert.

2. Balance selon la revendication 1, **caractérisée en ce que** la fonction de pesage d'objets encombrants désactive provisoirement au moins une touche de fonction (3 ou 4) de la balance.

3. Balance selon la revendication 2, **caractérisée en ce qu'**au moins une touche de fonction (3 ou 4) est intégrée dans la surface de pesage (1) et un capteur optique ou un capteur capacitif est prévu qui permet d'identifier un actionnement imminent d'une touche de fonction dû au rapprochement du produit à peser (5), la fonction de pesage d'objets encombrants étant activée automatiquement lorsque l'actionnement imminent de la touche de fonction est identifié.

4. Balance avec fonction de pesage d'objets encombrants selon l'une des revendications 1 à 3, **caractérisée en ce qu'**au moins un capteur est formé comme un capteur optique.

5. Balance avec fonction de pesage d'objets encombrants selon l'une des revendications 1 à 3, **caractérisée en ce qu'**au moins un capteur est formé comme un capteur tactile, notamment comme un capteur de proximité capacitif.

6. Balance avec fonction de pesage d'objets encombrants selon l'une des revendications 1 à 3, **caractérisée en ce qu'**au moins un capteur est formé comme un capteur à ultrasons.

7. Balance avec fonction de pesage d'objets encombrants selon l'une des revendications 1 à 6, **caractérisée en ce qu'**au moins une touche de fonction (3 ou 4) est formée simultanément comme un capteur.

8. Balance avec fonction de pesage d'objets encombrants selon l'une des revendications 1 à 7, **caractérisée en ce que** la balance émet un signal acoustique dès que la valeur pondérale est établie.

9. Balance avec fonction de pesage d'objets encombrants selon l'une des revendications 1 à 8, **caractérisée en ce que** l'écran (2) est intégré dans la surface de pesage (1).

10. Balance avec fonction de pesage d'objets encombrants selon l'une des revendications 1 à 8, **caractérisée en ce que** l'écran (2) fonctionne au moins partiellement comme une surface de pesage (1).
